# EUROPÄISCHE PATENTSCHRIFT

(11) **EP 3 601 639 B1**
(45) Veröffentlichungstag und Bekanntmachung des Hinweises auf die Patenterteilung: **10.11.2021**
(21) Anmeldenummer: 18719060.8
(22) Anmeldetag: 28.03.2018
(51) Int. Cl.: C25B 1/04, C25B 11/052, C25B 11/069, C25B 11/077, H01M 4/88, H01M 4/90, H01M 12/06, B01J 23/00, B01J 23/78, B01J 35/00, B01J 21/06

(54) **CHEMISCH BESTÄNDIGER, OXIDISCHER ELEKTROKATALYSATOR FÜR DIE SAUERSTOFFENTWICKLUNG WÄHREND DER ALKALISCHEN WASSERELEKTROLYSE**
CHEMICALLY RESISTANT, OXIDIC ELECTROCATALYST FOR OXYGEN DEVELOPMENT DURING ALKALINE WATER ELECTROLYSIS
ÉLECTROCATALYSEUR D'OXYDATION CHIMIQUEMENT RÉSISTANT POUR LA FORMATION D'OXYGÈNE PENDANT L'ÉLECTROLYSE ALCALINE DE L'EAU

(30) Priorität: 29.03.2017 DE 102017205339
(43) Veröffentlichungstag der Anmeldung: 05.02.2020
(73) Patentinhaber: Forschungszentrum Jülich GmbH, 52425 Jülich (DE); RWTH Aachen, 52062 Aachen (DE)
(72) Erfinder: BICK, Daniel, 45892 Gelsenkirchen (DE); VALOV, Ilia, 52066 Aachen (DE); SCHNELLER, Theodor, 52076 Aachen (DE); WASER, Rainer, 52076 Aachen (DE)
(74) Vertreter: Gille Hrabal Partnerschaftsgesellschaft mbB Patentanwälte
(86) Internationale Anmeldenummer: PCT/EP2018/057880
(87) Internationale Veröffentlichungsnummer: WO 2018/178135

(56) Entgegenhaltungen:
- US-A1- 2009 286 680
- US-A1- 2016 134 002
- US-A1- 2016 348 257
- D. S. BICK ET AL: "Degradation Kinetics during Oxygen Electrocatalysis on Perovskite-Based Surfaces in Alkaline Media", LANGMUIR, Bd. 34, Nr. 4, 18. Januar 2018 (2018-01-18), Seiten 1347-1352, XP055477518, US ISSN: 0743-7463, DOI: 10.1021/acs.langmuir.7b03733
- WESLEY T. HONG ET AL: "Descriptors of Oxygen-Evolution Activity for Oxides: A Statistical Evaluation", JOURNAL OF PHYSICAL CHEMISTRY C, Bd. 120, Nr. 1, 30. Dezember 2015 (2015-12-30), Seiten 78-86, XP055477299, ISSN: 1932-7447, DOI: 10.1021/acs.jpcc.5b10071 in der Anmeldung erwähnt

## Beschreibung

### Gebiet der Erfindung

Die vorliegende Erfindung betrifft einen Katalysator für die Sauerstoffentwicklungsreaktion bei der alkalischen Wasserelektrolyse. Insbesondere betrifft sie ein elektrisch leitfähiges Mischoxid basierend auf BaCoO_{3-δ}, einen Katalysator für die Sauerstoffentwicklungsreaktion bei der alkalischen Wasserelektrolyse, eine Anode, die das erfindungsgemäße Mischoxid umfasst, die Verwendung der Anode bei der Wasserelektrolyse oder in Metall-Luft-Batterien, die Verwendung des Mischoxids zur Herstellung der erwähnten Anoden, die Verwendung des Katalysators bei der alkalischen Wasserelektrolyse oder in Metall-Luft-Batterien, sowie ein Herstellungsverfahren die Anode. Weiter wird ein amorphes Mischoxid mit einer TTB (Tetragonal Tungsten Bronze) Struktur beansprucht.

Das erfindungsgemäße elektrisch leitfähige zweiphasige Mischoxid zeichnet sich durch hohe chemische Stabilität bei gleichzeitig hoher Stromdichte aus. Es basiert auf einer Perovskit-Struktur (BaCoO_{3-δ}), die mit Co₃O₄ modifiziert sowie mit Ti dotiert ist wie in Anspruch 1 definiert. Das erfindungsgemäße Mischoxid kann bevorzugt mit der Formel BaCo₁₋ₓTiₓO_{3-δ}:CO₃O₄ mit x=0,005 bis 0,03, bevorzugt x=0,01 bis 0,025, besonders bevorzugt x=0,02 beschrieben werden. δ definiert die Leerstellen in der Perovskit-Struktur und liegt im Bereich von ca. ca. 0,1 bis 0,8, bevorzugt 0,3 bis 0,7, besonders bevorzugt ca. 0,5 bis 0,6.

Weiterhin wird ein Zersetzungsprodukt des genannten Mischoxids offenbart, das sich im Verlauf der Sauerstoffentwicklungsreaktion bildet und nach nicht bindender Annahme der Erfinder die eigentliche katalytisch aktive Spezies dieses Materialsystems in der Sauerstoffentwicklungsreaktion der alkalischen Wasserelektrolyse ist.

### Hintergrund der Erfindung

Die Speicherung elektrischer Energie in großem Maßstab ist eine der wichtigsten und schwierigsten Aufgaben bei der Bewältigung des Übergangs von fossilen Brennstoffen zu sauberer und nachhaltiger Energieversorgung. Elektrochemische Reaktionen sind eine konzeptionell einfache Methode, um unter Nutzung chemischer Bindungen elektrische Energie effizient bereitzustellen und zu speichern. Energie kann insbesondere durch elektrochemische Spaltung von Wasser in Wasserstoff und Sauerstoff gespeichert werden. Die hierfür erforderliche elektrische Energie kann beispielsweise durch Photovoltaik oder andere umweltfreundliche, nachhaltige Stromvarianten wie Strom aus Wasserkraft oder Wind gewonnen werden. Die spätere Reaktion dieser beiden Gase in einer Brennstoffzelle kann daher saubere elektrische Energie liefern, wobei das einzige Nebenprodukt Wasser ist.

Der energetische Wirkungsgrad der Elektrolyse von Wasser liegt bei über 70 %. Mehrere Anlagenhersteller (z.B. Electrolyser Corp., Brown Boveri, Lurgi, De Nora, Epoch Energy Technology Corp.) bieten große Elektrolysegeräte mit einem noch höheren Wirkungsgrad - über 80 % - an. Da die Elektrolytkonzentration und die Temperatur einer Elektrolytlösung großen Einfluss auf den Zellwiderstand und somit auf die Energiekosten haben, wird bei modernen Anlagen eine 25- bis 30-prozentige Kaliumhydroxid-Lösung verwendet, die Temperatur liegt bei ca. 70-90 °C. Die Stromdichte liegt bei ca. 0,15-0,5 A/cm², die Spannung bei ca. 1,90 V. Zur Herstellung von 1 m³ Wasserstoff (bei Normaldruck) wird bei modernen Anlagen eine elektrische Energie von 4,3-4,9 kWh benötigt. Ein großer Druckelektrolyseur von Lurgi hat eine Leistung von 760 m³/h Wasserstoff bei ca. 3,5 MW (Stackleistung) und ca. 4,5 MW Eingangsleistung (Wechselspannung). Durch Elektrokatalysatoren (bei Kathoden z.B. Ni-Co-Zn, Ni-Mo, bei Anoden: Nickel-Lanthan-Perowskit, Nickel-Kobalt-Spinell) kann die Überspannung um ca. 80 mV gesenkt werden.

Beim alkalischen Elektrolyseur wird im Allgemeinen bei einer Gleichspannung von mindestens 1,5 Volt an der Kathode Wasserstoff und an der Anode Sauerstoff gebildet. Als Elektrolyt dient Kalilauge (Kaliumhydroxid-Lösung, KOH) mit einer Konzentration von 20-40 %. Eine gasdichte Membran, das sogenannte Diaphragma, lässt zwar den Transport von OH⁻-Ionen zu, verhindert aber gleichzeitig die Vermischung der entstehenden Produktgase. Als Elektroden werden sogenannte *"DSA-Elektroden"* (Dimensionsstabile Anoden, meist Titanelektroden mit einer Rutheniumoxid-Beschichtung) eingesetzt. Dies sind Streckmetalle, die mit einem Edelmetall-Katalysatoroxid -z.B. Ruthenium- oder Iridiumoxid - beschichtet werden. Es gibt aber auch Systeme mit Raney-Nickel-Katalysatoren in einer Gasdiffusionselektrode. Alkalische Elektrolyseure sind in großem Maßstab weltweit im Einsatz.

Die kinetischen Einschränkungen bei diesen Sauerstoff-basierten elektrochemischen Reaktionen sind jedoch häufig recht hoch, was die Entwicklung effizienter Technologien wie Solarbrennstoffe, Brennstoffzellen, Elektrolyseure und Metall-Sauerstoff-Batterien bis dato behindert.

Die bei der Wasserelektrolyse an der Anode ablaufende Sauerstoffentwicklungsreaktion (Oxygen Evolution Reaction, OER) kann grundsätzlich sowohl im sauren Milieu

2 H₂O → 4H⁺ + 4e⁻ + O₂↑

als auch im alkalischen Milieu ablaufen

4 OH⁻ →2 H₂O + 4 e⁻ + O₂↑.

Die Sauerstoffentwicklungsreaktion (OER) zeigt wie die Sauerstoffreduktionsreaktion (ORR) sowohl im alkalischen als auch im sauren Milieu eine sehr ungünstige langsame Kinetik.

Der Hauptvorteil der alkalischen Variante ist, dass hier anstelle von teuren Edelmetallkatalysatoren günstigere Alternativen verwendet werden können, während bei der sauren Variante nur einige wenige sehr teure Elektrodenmaterialien eine adäquate Stabilität zeigen, wie z.B. Oxide von Pt, Ir und Ru (DOKUMENT 10, S. 1803). Viele der bekannten günstigeren Katalysatoren, die nachstehend beschrieben werden, lösen sich jedoch im alkalischen Milieu auf. Daher besteht seit längerer Zeit ein großes Interesse an der Entwicklung kostengünstiger Katalysatoren für die OER im alkalischen Medium.

Das Standard-Nernst-Potential der Sauerstoffhalbzellenreaktion ist 1,23 V *vs.* reversible Wasserstoffelektrode (RHE), das durch das Wasserstoffstandardelektrodenpotential bei gegebenem pH definiert ist. Bei pH = 0 wird dieses Potential als Standardwasserstoffelektroden-Skala bezeichnet. Die OER ist oberhalb des Potentials thermodynamisch begünstigt, die ORR unterhalb. Da aber die Kinetik der OER sehr ungünstig ist, wird eine große Abweichung vom Halbzellpotential benötigt (als Überpotential bezeichnet), um einen merklichen Strom mit entsprechendem Stoffumsatz an der Elektrodenoberfläche zu erzeugen (DOKUMENT 7, S. 1405).

Die heute bekanntesten Oxidkatalysatoren für die OER schließen Nickel-Eisen-Kobalt-Oxide ein. Diese benötigen Überpotentiale von ca. 0,4 V bei 10 mA cm_{geo} (DOKUMENT 7, S. 1405). Generell werden Metalllegierungen, Oxide oder Nitride als Katalysatoren eingesetzt.

Für die Sauerstoffentwicklungsreaktion (OER) während der alkalischen Wasserelektrolyse werden Elektrokatalysatoren benötigt, die bei geringen Materialkosten hohe chemische Stabilität in hochkonzentrierten alkalischen Lösungen und während der Sauerstoffentwicklung aufweisen. Das Überpotential der Sauerstoffentwicklungsreaktion soll möglichst gering gehalten werden, um hohe Stromdichten im Elektrolysebetrieb zu erreichen.

Zur kosteneffizienten Nutzung der alkalischen Wasserelektrolyse werden Alternativen zu den aktuell verwendeten Elektrokatalysatoren benötigt. Momentan finden sowohl die Metalle Ni, Co, Fe und Raney-Nickel sowie Kombinationen dieser Metalle (DOKUMENT 1), als auch die Edelmetalle Ir und Ru sowie deren Oxide Anwendung als Elektrokatalysatoren bei der Sauerstoffentwicklung (DOKUMENT 2, DOKUMENT 3). Diese werden auf der Anode des Elektrolyseurs in Form von Schichten aufgebracht. Das Überpotential der Sauerstoffentwicklung ist bei den genannten Edelmetallen am niedrigsten. Auf unedlen Metallelektroden findet dagegen die Sauerstoffentwicklung bei höheren Überpotentialen statt und geht mit kürzeren Lebenszeiten der Anoden einher. Die Materialkosten für Elektroden mit niedrigen Überpotentialen und langen Lebenszeiten sind dementsprechend sehr hoch.

Oxidische Katalysatoren sind eine Alternative zu den unedlen Metallelektroden, da sie sehr niedrige Überpotentiale für die Sauerstoffentwicklung aufweisen.

Übergangsmetalloxide wie Perovskite der Formel ABO₃, die aus Seltenerden- und Erdalkalielementen (A) und Übergangsmetallkationen (B) aufgebaut sind, sind hier von besonderem Interesse, da sie intrinsische Aktivitäten aufweisen, die mit denen von "Goldstandard"-OER-Katalysatoren wie IrO₂ und RuO₂ vergleichbar sind (DOKUMENT 4, S. 2)

In der Literatur werden zahlreiche Perovskite als potentielle Kandidaten für die Sauerstoffentwicklungsreaktion diskutiert. Prominente Beispiele für sehr aktive Perovskit-Katalysatoren sind Pr_{0,5}Ba_{0,5}CoO₃ (PBCO) (DOKUMENT 4) und Ba_{0,5}Sr_{0,5}Co_{0,8}Fe_{0,2}O_{3-δ} (BSCF) (DOKUMENT 5).

Ein Übersichtsartikel über die Vielzahl an Perovskiten und Deskriptoren für deren Sauerstoffentwicklungsaktivität bei der alkalischen Wasserelektrolyse wurde kürzlich von Hong et al., publiziert (DOKUMENT 6). Beispiele für dort erwähnte Perovskite sind LaCu_{0,5}Mn_{0,5}O₃, La_{0,5}Ca_{0,5}CoO_{3-δ}, LaNiO₃, LaCoO₃ (LCO), LaMnO₃ (LMO), La_{0,4}Sr_{0,6}CoO_{3-δ} (LSC46), Ba_{0,5}Sr_{0,5}Co_{0,8}Fe_{0,2}O_{3-δ} (BSCF82), SrCo_{o,8}Fe_{0,2}O_{3-δ} (SCF82), LaNiO₃, LaFeO₃, LaMnO₃, LaCrO₃, La_{0,4}Sr_{0,6}CoO_{3-δ} (LSC46), GdBaCo₂O_{5+δ} (GBCO), SmBaCo₂O_{5+δ} (SBCO), HoBaCo₂O_{5+δ} (HBCO), PrBaCo₂O_{5+δ} (PBCO). Die stöchiometrische Schreibweise von PBCO und anderer Perovskite in der Literatur wird z.T. unterschiedlich gewählt, meint aber dieselbe Struktur, d.h. PrBaCo₂O_{5+δ} und Pr_{0,5}Ba_{0,5}CoO₃.

Die schlechte chemische Stabilität in alkalischer Lösung und unter den Betriebsbedingungen der alkalischen Wasserelektrolyse (60-80 °C, ≤ 30 bar, hohe Salzkonzentration im Elektrolyten) der meisten oxidischen Katalysatoren bildet das Hauptproblem bei deren Anwendung.

Abhängig von den verwendeten Perovskiten kommt es zur Auslaugung von Metallionen aus dem Perovskitgitter und häufig auch zu einer Amorphisierung des Elektrokatalysators (s. z.B. DOKUMENT 9, DOKUMENT 7, DOKUMENT 8).

Ein weiterer Nachteil der oxidischen Elektrokatalysatoren ist die meist schlechte elektrische Leitfähigkeit (DOKUMENT 2). Dies führt dazu, dass Perovskite häufig mit elektrisch oder ionisch leitfähigen Bindemitteln wie z.B. Nafion® (sulfoniertes Tetrafluoropoylethylen-Polymer) gemischt werden, wodurch zwar die Leitfähigkeit erhöht, die chemische Stabilität aber gesenkt wird.

Die Erfinder haben bereits ein Modell zur Erläuterung der Stabilität und des Abbaus von Perovskit-Elektrokatalysatoren bei der OER vorgeschlagen und einen Lebenszeittest entwickelt (ESLT, End of Service Life Test), um unterschiedliche oxidische OER-Katalysatoren vergleichen zu können (DOKUMENT 11, insbesondere S. 157, rechte Spalte). Es wurde gezeigt, dass die Zersetzung von PBCO während der OER mit der Defektchemie zusammenhängt (DOKUMENT 11).

DOKUMENT 14 offenbart eine Wasserdampfelektrolysezelle, bestehend aus einer Anodenschicht, einer Kathodenschicht und einer dazwischen angeordneten Protonenleitenden Oxid-Elektrolytschicht. Konkret wird ein Katalysator für die Wasserelektrolyse mit einer variablen Zusammensetzung aus Ba und Co mit Perovskitstruktur offenbart, der u.a. mit Cobaltoxid versetzt werden kann. Weitere als Zusatz mögliche Oxide für den Katalysator sind Silberoxid, Nickeloxid, Eisenoxid und ein Kompositoxid wie z.B. Nickelferrit und Cobaltferrit. Weder eine Dotierung mit Ti noch die geleichzeitige Anreichung mit Co₃O₄ und Dotierung mit Ti wird bezüglich des Katalysators beschrieben.

Weiterhin offenbart DOKUMENT 14 einen protonenleitenden Elektrolyten, bestehend aus einem Perovskit äußerst variabler Zusammensetzungen, wobei neben Zr, Ce und Sc auch Ti auf dem B-Platz erwähnt ist. Weiterhin ist es laut DOKUMENT 14 bevorzugt, dass mindestens ein Teil des A-Platzes und des B-Platzes mit einem oder mehr Elementen substituiert ist, ausgewählt aus La, Ce, Pr, Nd, Sm, Gd, Eu, Yb, Sc, Y, In, Ga, Fe, Co, Ni, Zn, Ta und Nb. Besonders empfiehlt DOKUMENT 14 Perovskite der Typen Sr-Zr-Y, Sr-Zr-Ce-Y, Ca-Zr-ln, La-Sc, Sr-Ce-Yb und La-Sr-Ti-Nb als elektronenleitende Elektrolyte.

DOKUMENT 15 ist ein Übersichtsartikel über die Entwicklungen und Perspektiven oxidbasierter Katalysatoren für die OER. Als halbleitende Oxide, die als OER-Katalysatoren verwendet werden können, werden besonders solche mit mittlerer Bindungsstärke für Sauerstoff, nämlich RuO₂, Co₃O₄, NiO, PtO₂, SrCoO₃, LaNiO₃, SrCoO₃ und SrNiO₃ empfohlen.

DOKUMENT 16 ist ebenfalls ein Übersichtsartikel zur Wasseroxidationsreaktion. Es werden technologisch relevante Katalysatoren zur Energieerzeugung aus reichlich vorkommenden Metallen diskutiert, insbesondere Co₃O₄, bzw. CoOₓ neben Eisenoxiden, Nickeloxiden, Manganoxiden und Mischoxiden wie Ni_{0.9}Fe_{0.1}Oₓ und NiFe₂O₄. Auch Perovskite werden erwähnt, insbesondere Ba-Sr-Co-Fe-Perovskite. Diese erleiden während der Wasseroxidation DOKUMENT 16 zufolge strukturelle Veränderungen vom kristallinen zum amorphen Zustand, was auf eine Umwandlung der lokalen Struktur vom über die Ecken verbundenen Oktaeder zum über die Kanten verbundenen Oktaeder zurückgeführt werden könnte und laut DOKUMENT 16 mit erhöhter Aktivität verbunden sein könnte.

DOKUMENT 17 betrifft die Synthese von magnetoresistiven La₁₋ₓ(Ca,Sr)ₓMnO₃-Filmen aus Metallpropionaten. Die Propionate werden ihrerseits aus den entsprechenden Acetaten erhalten. Konkret sind Propionate von La, Mn, Ca und Sr offenbart. Die Synthese erfolgt durch Lösen der Metallacetate in einer Mischung aus Propionsäure und Propionsäureanhydrid durch Erhitzen unter Rückfluss. Die erhaltene Lösung wird z.B. mittels Spin-coating auf einer Pt-TiO₂-Si-Träger aufgetragen und anschließend bei 550-750 °C kalziniert. Die Filme weisen eine Dicke von ca. 50 nm auf. Sie können auch mittels Mehrfachauftrag erzeugt werden.

DOKUMENT 18 offenbart die Herstellung dünner BaTiO₃ bzw. SrTiO₃-Filme aus den entsprechenden Acetaten, Propionaten, 2-Methylpropionaten und 2-Ethylhexanoaten als A-Platz-Vorläufermaterialien sowie stabilisiertem Ti-tetrabutoxid als Titanvorläufer durch ein chemisches Lösungs-Abscheidungs-Verfahren. Die aufgetragenen Filme werden vor dem Kalzinieren bei 250 bis 450 °C vorgetrocknet.

US 2009/286680 A1 offenbart ein elektrisch leitfähiges Mischoxid auf Perovskitbasis der Struktur ABO₃ mit A = Ba und B = Co, umfassend zusätzlich Ti als Dotierstoff.

US 2016/328257 A1 offenbart ein elektrisch leitfähiges Mischoxid auf Perovskitbasis der Struktur ABO₃, umfassend Ba, Co und Ti, sowie dessen Verwendung als OER-Katalysator.

US 2016/134002 A1 offenbart ein elektrisch leitfähiges zweiphasiges Mischoxid auf Perovskitbasis der Struktur ABO₃ mit A = Ba und B = Co, umfassend zusätzlich Co₃O₄, sowie dessen Verwendung als OER-Katalysator.

### Referenzen

DOKUMENT 1: A. Godula-Jopek et al (Ed.), Hydrogen Production: by Electrolysis, Wiley VCH-Verlag (2014), S. 124-128
DOKUMENT 2: P. Kurzweil und O. Dietlmeier, Elektrochemische Speicher, Springer Verlag (2015), S. 440-442
DOKUMENT 3: C. C. L. McCrory et al., J. Am. Chem. Soc. 137, 4347-4357 (2015)
DOKUMENT 4: A. Grimaud et al., Nature Communications 4:2439 (2013)
DOKUMENT 5: J. Suntivich et al., Science 334, 1383 (2011)
DOKUMENT 6: W. T. Hong et al., J. Phys. Chem. C 120, 78-86 (2016)
DOKUMENT 7: W. T. Hong et al., Energy Environ. Sci. 8, 1404-1427 (2015)
DOKUMENT 8: K. J. May et al., Phys. Chem. Lett. 3, 3264-3270 (2012)
DOKUMENT 9: J.R. Galán-Mascarós, ChemElectroChem, 2:37-50 (2015)
DOKUMENT 10. E. Fabbri et al., Catal. Sci. Technol. 4, 3800-3821 (2014)
DOKUMENT 11: D.S. Bick et al., Electrochimica Acta 218 (2016) 156-162
DOKUMENT 12: S. Halder et al., J. Sol-Gel Sci. Tech. 33, 299-306, 2005
DOKUMENT 13: D. N. Müller, "Strukturelle und elektronische Untersuchungen am hoch sauerstoffdefizitären Mischleiter BaxSr1-xCo0,8Fe0,2O3-δ (BSCF)", Dissertation RWTH Aachen, 2010
DOKUMENT 14: US 2017/0211193
DOKUMENT 15: F. Fabbri et al., Catal. Sci. Technol., 2014, 4, 3800-3821
DOKUMENT 16: J. R. Galán-Mascaros, ChemElectroChem 2015, 2, No. 1, 37-50
DOKUMENT 17: U. Hasenkox et al., J. Am. Ceram. Soc.,1997, 80, 2709-2713
DOKUMENT 18: U. Hasenkox et al., J. Sol-Gel Sci. Technol., 1998, 12, 67-69

### Aufgabe der Erfindung

Die Aufgabe der Erfindung besteht angesichts der Nachteile der bekannten oxidischen Katalysatoren in der Bereitstellung eines Katalysators für die Sauerstoffentwicklungs-reaktion in der alkalischen Wasserelektrolyse mit hoher chemischer Stabilität, der bei möglichst geringem Überpotential arbeitet und kostengünstig ist, sowie in der Bereitstellung eines Herstellungsverfahrens dafür.

### Figuren

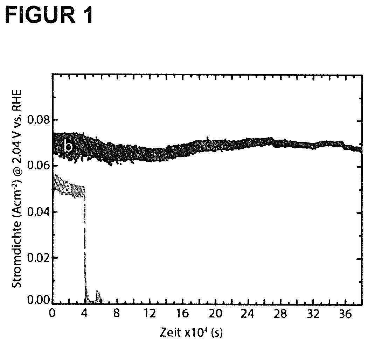

Fig. 1 zeigt das Ergebnis des Lebenszeittests (ESLT - End of Service Life Test) mit einer erfindungsgemäßen Anode im Vergleich zu einer bekannten PBCO-Anode. Gezeigt ist die Stromdichte (bei 2,04 V vs. RHE) in Abhängigkeit von der Zeit der auf BaCoO₃ basierten Materialsysteme (a) Pr_{0.2}Ba_{0.8}CoO₃ als Vergleich zu der als (b) aufgetragenen Lebenszeit des im nachstehenden Beispiel hergestellten Elektrokatalysators. Beide Proben sind 100 nm dünn und in 1 M KOH bei 80°C getestet worden. Der aufgeführte Elektrokatalysator (b) weist über achtfach erhöhte Lebensdauer und um 20 mA/cm² erhöhte Stromdichten als der Vergleich (a) auf.

### Lösung der Aufgabe

Die Aufgabe wird gelöst durch das elektrisch leitfähige Mischoxid nach Anspruch 1. eine bevorzugte Ausführungsform ist in Anspruch 2 definiert. Anspruch 3 betrifft einen Katalysator für die Sauerstoffentwicklungsreaktion, umfassend das erfindungsgemäße Mischoxid. Ansprüche 4 und 5 definieren erfindungsgemäße Anoden, umfassen das erfindungsgemäße Mischoxid. Anspruch 6 betrifft die Verwendung des Katalysators bei der alkalischen Wasserelektrolyse oder in Metall-Luft-Batterien. Anspruch 7 betrifft die Verwendung des erfindungsgemäßen Mischoxids zur Herstellung einer Anode für die genannten Zwecke. Ansprüche 8 bis 14 betreffen ein Verfahren zur Herstellung einer Anode. Anspruch 15 definiert ein amorphes Mischoxid, das ein Verhältnis Co:Ba von ca. 2:1 und eine TTB (Tetragonal Tungsten Bronze)-ähnliche Nahstruktur aufweist, erhältlich durch Einsatz des elektrisch leitfähigen Mischoxids auf Perovskitbasis nach einem der Ansprüche 1 oder 2 als Katalysator bei der Sauerstoffentwicklungs-reaktion der alkalischen Wasserelektrolyse, wobei durch Auslaugen von Ba das besagte amorphe Mischoxid entsteht.

Es handelt sich bei diesem amorphen Mischoxid um ein amorphes Reaktionsprodukt des erfindungsgemäßen elektrisch leitfähigen Mischoxids auf Perovskitbasis nach einem der Ansprüche 1 oder 2, das ein Verhältnis Co:Ba von 2:1 und eine TTB (Tetragonal Tungsten Bronze)-ähnliche Nahstruktur aufweist, erhältlich durch Einsatz des Mischoxids als Katalysator bei der Sauerstoffentwicklungsreaktion der alkalischen Wasserelektrolyse, wobei durch Auslaugen von Ba das besagte amorphe Mischoxid entsteht.

In Verfahren des Stands der Technik wird der oxidische Katalysator häufig in einer Feststoffreaktion hergestellt, indem stöchiometrische Mengen der entsprechenden Metalloxide miteinander vermahlen und an der Luft gesintert werden. Die Anoden für die OER werden anschließend durch Auftropfen (drop casting) einer das Mischoxid enthaltenden Tinte auf eine Elektrode aus amorphem Kohlenstoff (aus Acetylenschwarz mit Nafion®) hergestellt (DOKUMENT 4, DOKUMENT 8).

Ebenfalls zur Anwendung kommt eine Nitratverbrennungsmethode, eine Copräzipitationsmethode oder die Pechini-Methode (DOKUMENT 8).

Als Substrate für oxidische Katalysatoren der OER werden in der Literatur neben dem erwähnten amorphen Kohlenstoff auch Pt(111), Au(111) und Nickel sowie mit Eisen dotiertes Nickel genannt (DOKUMENT10). Üblicherweise wird ein Titansubstrat eingesetzt. Auch mit konz. Salpetersäure behandeltes (passiviertes) Eisen, Gold, Platin oder Zink wird als Anodenmaterial eingesetzt. Ebenfalls üblich sind Metallschäume, z.B. aus Nickel, als Substrat für die Anode. Es existieren sehr viele Geometrien für Elektrolyseure und entsprechend viele verschiedene Anodengeometrien.

Das erfindungsgemäße elektrisch leitfähige zweiphasige Mischoxid auf Perovskitbasis hat eine Struktur ABO₃ mit A = Ba, und B = Co, und umfasst zusätzlich 5-45 at%, bevorzugt 15 bis 30 at%, besonders bevorzugt 25 at% Co₃O₄, wobei die at % von Co bezogen auf die Gesamtzahl aller Co-Atome im ABo₃ und 0,5 bis 3 at%, bevorzugt 1 bis 2,5 at%, besonders bevorzugt 2 at% Ti als Dotierstoff, wobei die at% bezogen sind auf die Gesamtzahl der Co-Kationen im Perovskit ABO₃).

Das erfindungsgemäße Mischoxid umfasst eine elektrisch leitfähige Perovskit-Phase ABO₃, insbesondere BaCoO₃. Die Erfinder haben durch Versuche mit anderen Perovskiten wie z.B. PrCoO₃, BaSrCoFeO₃ und dem bekannten PrBaCoO₃ (PBCO) sowie reinem BaCoO₃ durchgeführt. Es hat sich dabei gezeigt, dass durch den zweiphasigen Perovskit BaCoO₃ + Co₃O₄ die weitaus besten Ergebnisse in der OER erzielt werden. Die elektrische Leitfähigkeit des Perovskits wird durch den Zusatz von Co₃O₄ weiter erhöht. Durch den Zusatz von Co₃O₄ wird ein zweiphasiges Mischoxid erhalten, wobei die erste Phase BaCoO₃ und die zweite Phase Co₃O₄ ist.

Zudem wird der Auflösungsprozess des Perovskits im alkalischen Elektrolysemedium, d.h. die Auslaugung von Metallionen, durch die erfindungsgemäße Dotierung mit Ti signifikant verlangsamt. Das Dotieren dient der Einstellung der Sauerstoffstöchiometrie, d.h. durch das Dotierungselement werden Sauerstoffleerstellen erzeugt. Eine genaue Darstellung der dadurch erfolgten Umlagerungen der Perovskit-Kristallstruktur ist dem DOKUMENT 11 zu entnehmen, dessen Inhalt hier vollumfänglich aufgenommen wird. Insbesondere wird auf S. 111,

Fig. 9 von DOKUMENT 11 verwiesen. Das Dotierelement ist erfindungsgemäß, das den Oxidationszustand +4 leicht einnehmen kann und dessen Atomradius in das Kristallgitter passt. Ti⁴⁺ ist zwar relativ groß, funktioniert aber erfindungsgemäß überraschend gut. Versuche mit Hf⁴⁺ haben weniger gute Katalysatoren ergeben. Daher wird Ti als Dotierstoff verwendet.

Das erfindungsgemäße Mischoxid lässt sich auch durch die stöchiometrische Formel BaCo₁₋ₓTiₓO_{3-δ}:Co₃O₄ mit x=0,005 bis 0,03, bevorzugt x=0,01 bis 0,025, besonders bevorzugt x=0,02 beschreiben. δ definiert die Sauerstoffleerstellen in der Perovskit-Struktur. Besonders bevorzugt hat das erfindungsgemäße Mischoxid die Formel BaCo_{0,98}Ti_{0,02}O_{3-δ}:Co₃O₄. Das erfindungsgemäße Mischoxid ist also ein sauerstoffdefizitärer Mischleiter. δ bedeutet, dass das Oxid Sauerstoffleerstellen aufweist. δ ist erfindungsgemäß im Bereich von 0,1 bis 0,8. Werte von 0,3 bis 0,7 oder besonders bevorzugt 0,5 bis 0,6 sind möglich.

Während die meisten wichtigen Nicht-Übergangsmetalloxide nur einen Oxidationszustand besitzen (eine bedeutende Ausnahme ist Zinnoxid), gilt das Gegenteil für Übergangsmetalle. Dies erleichtert die Bildung von Sauerstoff-Leerstellen (Punktdefekt). Wenn ein Sauerstoff-Atom aus dem Kristall entfernt wird, können von ihm zurückgelassenen Elektronen von den Metall-Kationen aufgenommen werden und die Fehlstelle so stabilisiert werden. Durch die große Auswahl an Kationen, mit denen die A- und B-Plätze bei Perovskiten besetzt werden können, konnten Kombinationen gefunden werden, die es der Perovskitstruktur erlauben, hohe Sauerstoffnichtstöchiometrien aufzunehmen. Durch diese hohen Konzentrationen an Sauerstoffleerstellen wird eine hohe ionische Leitfähigkeit erreicht, wodurch Perovskite entwickelt werden konnten, die als sehr gute Mischleiter bezeichnet werden.

Die Perovskitphase des BaO-Bi₂O₃ -Systems kann als Mischleiter betrachtet werden. Die höchste elektronische Leitfähigkeit zeigte sich bei einer Zusammensetzung von Ba_{0,67}(Bi₂O₃)_{0,33}, bei der eine reine Perovskitphase identifiziert wurde, die der Stöchiometrie BaBiO_{2.5} entspricht. Hier beträgt die Anzahl der Sauerstoffleerstellen δ also 0.5. Dies entspricht einer Perovskitstruktur, in der ein Sechstel aller Sauerstoffplätze nicht besetzt sind. Werte von δ = 0.8 sind laut DOKUMENT 13 in BSCF5582 erreichbar. Werte über 0,8 führen dagegen meist zu einer Destabilisierung des Kristalls. Bei stöchiometrischem BSCF ist δ = 0, d.h. es liegen keine Sauerstoffleerstellen vor. Auch eine hohe Konzentration an Leerstellen führt bei Perovskiten nicht zwangsläufig zu einer Ordnung der Leerstellen, welche allgemein die ionische Leitfähigkeit verringern würde (DOKUMENT 13).

Eine Amorphisierung findet während der Sauerstoffentwicklungsreaktion mit dem erfindungsgemäßen Katalysator als Anodenmaterial zwar innerhalb weniger Sekunden statt, diese beeinflusst aber überraschenderweise nicht die positiven elektrochemischen Eigenschaften des Elektrokatalysators. Nach weniger als 5% der Lebensdauer des Katalysators ist bereits die komplette Katalysatorschicht in den amorphen Zustand übergegangen.

Es hat sich durch Versuche der Erfinder gezeigt, dass die erfindungsgemäße Kombination der Dotierung des Perovskits mit Ti mit dem Zusatz von Co₃O₄ das Auslaugen der Kationen bei der OER verhindert.

Perovskite zersetzen sich generell, indem sie A-Kationen durch Auslaugen verlieren. Damit einher geht die Amorphisierung des Mischoxids. Überraschenderweise erreicht das erfindungsgemäße zweiphasige dotierte Mischoxid während der Zersetzung einen stabilen Zustand. Dieser Zustand lässt sich als amorphes Oxid mit ausgeprägter Nahstruktur beschreiben. Kristalle besitzen i.a. lange Symmetrieketten. Durch diese Periodizität sind z.B. in der Röntgenstrukturanalyse Interferenzen zu erkennen. Bricht man diese Periodizität auf, gibt es keine Interferenzen mehr in der Röntgenstrukturanalyse. Die erfindungsgemäße Anordnung bedeutet einen Bereich von unter 100 nm. Diese erfindungsgemäße Nahstruktur ist mit der Tetragonalen Wolfram Bronze verwandt (Tetragonal Tungsten Bronze TTB). In dieser Nahstruktur befinden sich Co-Atome in ausgeprägten CoO₆-Oktaedern und bilden zusätzlich Tetraederlücken. Ba kann sich in dieser Nahstruktur auf 2 Plätzen befinden: ein Platz wird während der Zersetzung ausgelaugt, der andere bleibt dagegen besetzt. In Experimenten, die die Erfinder durchgeführt haben, hat sich gezeigt, dass ca. 60 at% des ursprünglichen Ba im Material verbleiben. Ausgehend von einem Atomverhältnis Co:Ba 4:3 im ursprünglichen Mischoxid enthält das stabile Zersetzungsprodukt daher Co und Ba im Atomverhältnis 2:1 in der amorphen Phase. Die Erfinder gehen davon aus, ohne an diese Annahme gebunden zu werden, dass dieses stabile amorphe Zwischenprodukt die eigentlich katalytisch aktive Spezies dieses Materialsystems bei der OER ist. Dieses Zersetzungsprodukt des erfindungsgemäßen zweiphasigen elektrisch leitfähigen Mischoxids ist in Anspruch 15 beansprucht.

Chemisch stabil beutet im Rahmen der Erfindung, dass das Auslaugen von Ba stark verlangsamt wird, die katalytischen Eigenschaften über den gesamten Zersetzungsprozess konstant bleiben und der ESLT bis zur kompletten Zersetzung der Schicht möglichst lange Betriebszeiten/100nm (im Labortest) ergibt. Je langsamer die Auflösung, desto stabiler der Film (bei gleichzeitig konstantem Katalyseverhalten).

Die Erfindung stellt also eine chemisch stabile Alternative für oxidische Elektrokatalysatoren bereit, die ein gleichzeitig geringes Überpotential und eine hohe Stromdichte bei der alkalischen Wasserelektrolyse aufweist.

Der erfindungsgemäße Katalysator umfasst das vorstehende Mischoxid und ggf. weitere übliche geeignete Zusätze wie z.B. Nafion®, wobei er jedoch überraschenderweise insbesondere ohne solche Zusätze sehr gute Aktivität und Stabilität zeigt. Daher wird erfindungsgemäß bevorzugt *kein* solcher Zusatz verwendet. Das erfindungsgemäße Mischoxid wird bevorzugt in einem nachstehend beschriebenen nasschemischen Verfahren auf einem geeigneten elektrisch leitfähigen Elektrodensubstratmaterial aufgebracht, um die erfindungsgemäße Anode herzustellen.

Das elektrisch leitfähige Substrat kann jedes übliche für Anoden bei der OER verwendete Substrat sein und jede dafür übliche Größe und Form aufweisen, z.B. Blech, Gitter, Schaum.

Zur Untersuchung der Katalysatoreigenschaften im Labormaßstab wird in der vorliegenden Beschreibung ein mit einer TiO₂-Haftschicht und einer polykristallinen Pt(111) Schicht beschichteter Si(100)-Wafer verwendet. Auch andere übliche Haftschichten sind möglich, z.B. TiN und/oder AlOₓ. Die Orientierung des Si-Wafers ist z.B. (100), wobei auch anders vorzugsorientierte Si-Wafer einsetzbar sind. Si-Wafer sind gezogene Einkristalle. Somit gibt es nur orientierte Schnitte davon. Das Si dient als formgebende Unterlage, mittels der Haftschicht die Pt-Schicht aufgebracht werden kann. Auf dem Si-Wafer wird die Pt-Schicht auf übliche Art und Weise erzeugt, insbesondere durch Sputtering, z.B. Magnetron-Sputtering (PVD, physical vapour deposition, physikalische Dampfabscheidung). Um vergleichbare Tests durchführen zu können, werden erfindungsgemäß Pt(111)-Schichten eingesetzt, die erhalten werden, indem auf Si(100) Wafer Pt durch Magnetron-Sputtern aufgebracht und deren Orientierung dann durch Annealing verstärkt wird. Entscheidend ist, dass die aufgebrachte Pt Schicht dicht und glatt ist. Diese Methoden sind aus dem Stand der Technik bekannt, z.B. aus DOKUMENT11 und den darin angegebenen Referenzen.

Die Orientierung der polykristallinen Pt-Schicht ist z.B. (111). Auch andere Orientierungen sind geeignet, solange auf der Oberfläche polykristalline Perovskitschichten abgeschieden werden können. Entscheidend dafür ist, dass die Pt-Oberfläche Kristallisationspunkte aufweist, die das Kristallwachstum der Perovskit-Phase ermöglichen.

Bevorzugt werden erfindungsgemäß Si-Wafer mit einer TiO₂-Haftschicht und einer darauf aufgebrachten polykristallinen Pt(111)-Schicht eingesetzt. Der Si-Wafer ist bevorzugt ein Si(100)-Wafer.

Die Orientierung der Pt-Schicht wird mit üblichen Verfahren verstärkt, insbesondere durch Erhitzen auf eine Temperatur von 800 bis 900 °C, bevorzugt 850 °C während 5 bis 10 min, bevorzugt 8 min, z.B. unter Sauerstoffstrom. Die Orientierung der Pt-Schicht kann auch bei niedrigeren Temperaturen während entsprechend längerer Zeit erzielt werden.

Die Dicke der Haftschicht beträgt 2 bis 10 nm, bevorzugt 4 bis 7 nm und besonders bevorzugt 5 nm.

Die Dicke der Pt(111) Schicht beträgt 20 bis 80 nm, bevorzugt 30 bis 70 nm und besonders bevorzugt 50 nm.

Die Dicke sämtlicher Schichten wird im Rahmen der Erfindung mit üblichen Verfahren bestimmt, insbesondere mittels XRR (Röntgenreflektrometrie) und SEM (Rastertunnelmikroskop-Aufnahmen des Probenquerschnitts).

Der erfindungsgemäße Katalysator wird bevorzugt durch Lösen der Ausgangsmetallsalze in einem geeigneten Lösungsmittel in dem gewünschten Mengenverhältnis und Rühren der Lösung unter Rückfluss während einer Zeit von ca. 0,5 bis 2 h, bevorzugt ca. 1 h hergestellt. Dadurch wird eine Präkursorlösung erhalten. Durch längeres Erhitzen wird kein Unterschied beim Mischoxid erzielt, es ist aber auch möglich, z.B. bis zu 24 h.

Die Ausgangsmetallsalze sind Salze von Ba, Co und Ti in den gewünschten Mengenverhältnissen. Es werden solche Salze verwendet, die beim Erhitzen unter Sauerstoffzufuhr Oxide bilden, z.B. Salze von organischen Carbonsäuren, Dicarbonsäuren oder Tricarbonsäuren, oder andere oxidbildende Salze wie z.B. Nitrate, Ammoniumsalze oder Salze von Aminosäuren, Hydroxycarbonsäuren, Carbonate, ß-Diketonate, Metallalkoxide, Metallaminoalkoxide, Sulfate und andere dem Fachmann bekannte oxidbildende Salze. Bevorzugt sind Salze von Carbonsäuren oder Dicarbonsäuren, z.B. Acetate, Propionate, Oxalate, Pentandionate. Besonders bevorzugt sind Acetate und Pentandionate. Geeignet werden die Salze derselben Säuren eingesetzt, aber auch Salze verschiedener Säuren, sowie in durch Reaktion der jeweiligen Metalle mit Alkoholen, Etheralkoholen wie Butoxyethanol, Propoxyethanol, Methoxyethanol u.ä. Aminen oder Aminoalkoholen erhaltene Salze in den entsprechenden Lösungsmitteln sind geeignet (z.B. Ba-Diaminoethoxid in Aminoethanol, s. z.B. DOKUMENT 12). Beispielsweise werden Acetate und Pentandionate gemeinsam eingesetzt, z.B. Bariumacetat mit Cobaltacetat und Titan(IV)-oxid-bis-2,4-pentandionat.

Als Lösungsmittel kommen übliche im Stand der Technik zum Lösen von Salzen geeignete nichtwässrige Lösungsmittel in Frage. Es werden bevorzugt Gemische von organischen Carbonsäuren mit den entsprechenden Anhydriden eingesetzt, insbesondere hat sich ein Gemisch von Propionsäure/Propionsäureanhydrid als günstig erwiesen. Das Mischungsverhältnis (nach Volumen) von Carbonsäure zu Carbonsäureanhydrid beträgt 10:1 bis 1:1, bevorzugt 7:1 bis 4:1, besonders bevorzugt 5:1. In diesem Lösungsmittelgemisch beträgt die Siedetemperatur bei Normalbedingungen ca. 140 °C, was geeignet ist, um die Salze vollständig zu lösen.

Die Menge des Lösungsmittels wird so gewählt, dass nach Lösen aller Salze eine Endkonzentration von 0,05 bis 0,25 Mol/l, bevorzugt 0,10 bis 0,20 Mol/l, besonders bevorzugt 0,15 Mol/l bezogen auf das Ba-Kation erreicht wird. Die Molarität der Lösung bestimmt die Kristallqualität und die Schichtdicke pro Abscheidungsschritt. Im allgemeinen werden erfindungsgemäß 0,15 M Lösungen eingesetzt.

Der Zusatz von Co₃O₄ im Endprodukt-Mischoxid wird dadurch erreicht, dass eine entsprechende gegenüber der Perovskit-Phase überschüssige Menge an Co-Salz, insbesondere Cobaltacetat eingesetzt wird.

Die Dotierung mit Ti, wird durch Zugabe des entsprechenden Salzes von Ti, insbesondere Ti(IV)-oxid-bis(2,4-pentandionat), in der gewünschten Menge erreicht.

Die erhaltene Präkursor-Lösung kann, falls gewünscht, nach dem Abkühlen filtriert werden, z.B. über einen 0,2 µm PTFE-Filter oder sonstige übliche Filter. Durch das Filtrieren wird insbesondere eine bessere Schichtqualität beim nachfolgenden Spincoating-Verfahren erzielt.

Zur Herstellung der erfindungsgemäßen Anode wird die so erhaltene Präkursorlösung durch übliche nasschemische Verfahren auf das vorstehend beschriebene Substrat aufgebracht, bevorzugt schrittweise. Bevorzugt wird ein Spincoating-Verfahren angewendet, aber auch Spraycoating- oder Dipcoating-Verfahren, Auftropfen, Aufstreichen, Rakeln, Walzen und andere gängige Verfahren sind möglich.

Nach dem Auftragen jeder Schicht wird das beschichtete Substrat auf eine Temperatur von ca. 250 bis 400 °C, bevorzugt 300 bis 380 °C, besonders bevorzugt 350 °C, z.B. auf einer Heizplatte, während weniger Minuten, z.B. 1 bis 5 min, bevorzugt 2 min, getrocknet, bevor die nächste Schicht der Präkursorlösung aufgetragen wird. Bevorzugt werden mindestens 3 Schichten aufgetragen, noch bevorzugter insgesamt 5 Schichten, aber auch noch mehr Katalysatorschichten sind möglich. Es werden so viele Schichten aufgetragen, bis die gewünschte Gesamtschichtdicke der Katalysatorschicht erreicht wird.

Zum Abschluss wird die beschichtete Anode während 5 bis 12 Minuten, bevorzugt 6 bis 10 min, noch bevorzugter 8 min im Sauerstoffstrom auf ca. 700 bis 1000°C, bevorzugt 800 bis 900 °C, besonders bevorzugt 850°C ausgeheizt.

Die Dicke der schließlich erhaltenen Katalysatorschicht auf dem Substrat beträgt nach dem Ausheizen ca. 50 bis 150 nm, bevorzugt 80 bis 130 nm, besonders bevorzugt 100 nm. Die Schichtdicke wird wie vorstehend beschrieben durch SEM bestimmt. Diese Schichtdicke ist für Labortests besonders geeignet. Für industrielle Anwendungen sind größere Schichtdicken üblich, die ebenfalls erfindungsgemäß hergestellt werden können.

Die solcherart erhaltene Anode ist ein Modell zum Testen des Materialsystems und dessen Eigenschaften. Der erfindungsgemäße oxidische Katalysator kann in anderen auf übliche Art und Weise erhältlichen Anodensystemen in industriellem Maßstab in Elektrolyseuren eingesetzt werden, sowie in Metall-Luft-Batterien.

Der erfindungsgemäße Elektrokatalysator weist gegenüber dem Vergleichskatalysator PBCO eine mehr als achtfach erhöhte Lebensdauer und eine um 20 mA/cm² erhöhte Stromdichte auf, wie im folgenden Beispiel gezeigt wird.

Skaliert man die Ergebnisse des nachstehenden Lebenszeittests auf industrierelevante Maßstäbe, so ist eine Lebenszeit der erfindungsgemäßen Elektrode von 10 Jahren mit einer Schichtdicke von nur 83 µm gewährleistet. In der industriellen Anwendung bei höheren Betriebsspannungen und Elektrolytkonzentrationen sind sogar noch höhere Stromdichten zu erwarten als im nachstehend beschriebenen Beispiel.

### Beispiel

### Herstellung des Präkursors

0,288 g Bariumacetat, 0,396 g Cobaltacetat und 0,008 g Ti(IV)-oxid-bis-(2,4-pentandionat) werden in 10 ml Propionsäure/Propionsäureanhydrid 5:1 (nach Volumen) gelöst. Dadurch wird eine 0,11 M Lösung bezogen auf das Ba-Kation erhalten. Die Lösung wird unter Rückfluss 1 h bei 140 °C gerührt. Nach dem Abkühlen wird sie über einen PTFE 0,2 µm-Filter abfiltriert.

### Herstellung der Anode

Ein Siliziumwafer Si (100) wird mit einer 5 nm dicken Haftschicht (TiO₂) und einer polykristallinen 50 nm dicken Pt(111) Schicht versehen, die durch Magnetron-Sputtering aufgebracht wird. Dieses Substrat wird zur Verstärkung der Pt(111) Vorzugsorientierung während 8 min unter 4 sccm O₂-Fluss bei 850 °C ausgeheizt.

Der Präkursor wird nun schrittweise auf das Substrat aufgebracht. Hierzu werden zunächst 200 µl des oben hergestellten Präkursors mittels Spincoating auf das Substrat aufgetragen. Danach wird bei 350 °C auf einer Heizplatte während 2 min getrocknet. Dieses Vorgehen wird für weitere 4 Durchläufe wiederholt, jedoch jeweils nur mit 100 µl pro Durchlauf. Zum Abschluss wird dann 8 min unter 4 sccm O₂-Fluss bei 850 °C ausgeheizt. Die Katalysatorschicht hat nun eine Dicke von ca. 100 nm, bestimmt durch SEM.

### Lebenszeittest (ESLT - End of Service Life Test)

In einem Lebenszeittest wurde die chemische Stabilität unter beschleunigten Bedingungen der alkalischen Elektrolyse aufgezeigt. Die genaue Durchführung entspricht derjenigen aus DOKUMENT 11, insbesondere S. 157 Figur 1.

Es wurden kontinuierliche CV-Mess-Zyklen (zyklische Voltametrie) mit der Probe mit einer Scan-Rate von 100 mVs⁻¹ in einem Bereich von 1 V bis 2,1 V gegen eine RHE durchgeführt. Es wurden die erfindungsgemäße Anode und als Vergleich eine entsprechende Anode, die mit Pr_{0,2}Ba_{0,8}CoO_{3-δ} (PBCO) beschichtet war verwendet, die auf die gleiche Weise hergestellt worden war, und dieselbe Dicke aufwies wie die erfindungsgemäße Anode. Die Messung wurde in 1 M Kaliumhydroxidlösung bei 80 °C durchgeführt. Das Ergebnis des Versuchs bei 2,04 V ist in Figur 1 dargestellt.

Die Wasserzersetzungsreaktion startet in jedem Zyklus neu und beschleunigt die Zersetzung des Katalysators, bis der Katalysator vollständig gelöst ist (Figur 1b von DOKUMENT 11). An diesem Punkt des Tests beginnt nach einiger Zeit das Abschälen von Pt vom Si-Substrat durch Gasblasen (Figur 1c von DOKUMENT 11), gefolgt von Verätzung des Si-Substrats (Figur 1d von DOKUMENT 11), was in einer Stromdichte von 25 mA/cm² während des Si-Hydroxid-Ätzens resultiert. Die ESLT-Graphen in DOKUMENT 11 zeigen die Stromdichte bei 2,04 V vs. RHE im Verlauf der Zeit. Die scharfe Stromabnahme im Graphen zeigt das Ende der Lebensdauer an. Der Test ist mit beschleunigten Bedingungen verbunden, verglichen mit chronopotentiometrischen oder amperometrischen Verfahren, da die OER periodisch neu startet.

Die erfindungsgemäße Anode hatte eine Lebensdauer von 380.000 s mit konstantem Verlauf der Stromdichte, Nach dieser Zeit war die Katalysatorschicht komplett in Lösung gegangen. Die Vergleichs-Anode hatte dagegen nur eine Lebensdauer von 40.000 s.

Der erfindungsgemäße Elektrokatalysator weist gegenüber dem Vergleichskatalysator eine mehr als achtfach erhöhte Lebensdauer und eine um 20 mA/cm² erhöhte Stromdichte auf.

Skaliert man diese Ergebnisse auf industrierelevante Maßstäbe, so ist eine Lebenszeit der erfindungsgemäßen Elektrode von 10 Jahren mit einer Schichtdicke von nur 83 µm gewährleistet. In der industriellen Anwendung bei höheren Betriebsspannungen und Elektrolytkonzentrationen sind höhere Stromdichten zu erwarten.

BaCoO_{3-δ} (BCO) ist nicht als Elektrokatalysator geeignet, da es nach kurzer Betriebszeit passiviert.

## Patentansprüche

1. Elektrisch leitfähiges zweiphasiges Mischoxid auf Perovskitbasis der Struktur ABO₃ mit A = Ba, und B = Co, umfassend zusätzlich 5-45 at%, bevorzugt 15 bis 30 at%, besonders bevorzugt 25 at% Co₃O₄, wobei die at% Co bezogen sind auf die Gesamtzahl der Co-Atome im Perovskit ABO₃ und 0,5 bis 3 at%, bevorzugt 1 bis 2,5 at%, besonders bevorzugt 2 at% Ti als Dotierstoff, wobei die at% Ti bezogen sind auf die Gesamtzahl der Co-Kationen im Perovskit ABO₃.

2. Elektrisch leitfähiges Mischoxid nach Anspruch 1 der Formel BaCo_{0,98}Ti_{0,02}O_{3-δ}:Co₃O₄, wobei δ die Sauerstoffleerstellen in der Perovskit-Struktur definiert und im Bereich von 0,1 bis 0,8, bevorzugt 0,3 bis 0,7, besonders bevorzugt 0,5 bis 0,6 liegt.

3. Katalysator für die Sauerstoffentwicklungsreaktion im alkalischen Milieu, umfassend das elektrisch leitfähige zweiphasige Mischoxid nach Anspruch 1 oder 2.

4. Anode, umfassend das elektrisch leitfähige zweiphasige Mischoxid auf Perovskitbasis nach Anspruch 1 oder 2 sowie ein elektrisch leitfähiges Trägermaterial.

5. Anode nach Anspruch 4, wobei das Trägermaterial ein mit einer TiO₂-Haftschicht und einer polykristallinen Pt(111)-Schicht versehenes Siliziumwafer ist.

6. Verwendung des Katalysators nach Anspruch 3 bei der alkalischen Wasserelektrolyse oder in Metall-Luft-Batterien.

7. Verwendung des elektrisch leitfähigen zweiphasigen Mischoxids auf Perovskitbasis nach Anspruch 1 oder 2 zur Herstellung einer Anode für die alkalische Wasserelektrolyse oder für eine Metall-Luft-Batterie.

8. Verfahren zur Herstellung einer Anode nach Anspruch 4 oder 5, umfassend
a) Lösen von organischen Carbonsäure-, Dicarbonsäure- und/oder Tricarbonsäuresalzen und/oder anderen oxidbildenden Salzen von Ba und Co sowie Ti in einem nichtwässrigen Lösungsmittel,
b) Erwärmen der Lösung unter Rückfluss,
c) gegebenenfalls Filtrieren,
wobei der im elektrisch leitfähigen Mischoxid angestrebte Zusatz an Co₃O₄ durch die entsprechend gewählte überschüssige Menge an Co gegenüber der stöchiometrischen Perovskitphase eingestellt wird,
d) Aufbringen der Lösung auf ein elektrisch leitfähiges Substrat in einem Nassbeschichtungsverfahren,
e) Trocknen und anschließend
f) Ausheizen,
wobei die Schritte d) bis f) gegebenenfalls mehrfach wiederholt werden, bis die gewünschte Schichtdicke erzielt wird.

9. Verfahren nach Anspruch 8, wobei die Salze von Ba und Co Acetate, Propionate, Oxalate und/oder Pentandionate sind und das Salz von Ti Ti(IV)-oxid-bis(2,4-pentandionat) ist.

10. Verfahren nach Anspruch 8 oder 9, wobei das Lösungsmittel ein Gemisch von Propionsäure und Propionsäureanhydrid im Verhältnis nach Volumen von 10:1 bis 2:1, bevorzugt 7:1 bis 4:1, besonders bevorzugt 5:1 ist.

11. Verfahren nach Anspruch 8, wobei das Nassbeschichtungsverfahren ein Spincoating-, Spraycoating- oder Dipcoating-Verfahren ist.

12. Verfahren nach einem der Ansprüche 8 oder 9, wobei das Trocknen bei 250 bis 400 °C, bevorzugt bei 300 bis 380 °C und besonders bevorzugt bei 350 °C erfolgt.

13. Verfahren nach einem oder mehreren der Ansprüche 8 bis 12, wobei das Ausheizen bei 700 bis 1000 °C, bevorzugt bei 800 bis 900 °C, besonders bevorzugt bei 850 °C erfolgt.

14. Verfahren nach einem oder mehreren der Ansprüche 8 bis 13, wobei die Dicke der Katalysatorschicht nach Schritt f) 50 bis 150, bevorzugt 80 bis 130, besonders bevorzugt 100 nm beträgt, bestimmt mit einer SEM-Methode.

15. Amorphes Mischoxid, das ein Verhältnis Co:Ba von 2:1 und eine TTB (Tetragonal Tungsten Bronze)-Nahstruktur aufweist, in der Co-Atome sich in ausgeprägten CoO₆-Oktaedern befinden und zusätzlich Tetraederlücken bilden, erhältlich durch Einsatz des elektrisch leitfähigen Mischoxids auf Perovskitbasis nach einem der Ansprüche 1 oder 2 als Katalysator bei der Sauerstoffentwicklungsreaktion der alkalischen Wasserelektrolyse, wobei durch Auslaugen von Ba das besagte amorphe Mischoxid entsteht.

## Claims

1. Electrically conductive, biphasic mixed oxide based on perovskite of the structure ABO₃ with A=Ba and B=Co, comprising additionally 5-45 at%, preferably 15 to 30 at%, particularly preferably 25 at%, Co₃O₄, wherein the at% of Co are based on the total number of the Co atoms in the perovskite ABO₃ and 0.5 to 3 at%, preferably 1 to 2.5 at%, particularly preferably 2 at% Ti as dopant, wherein the at% Ti are based on the total number of the Co-cations in the perovskite ABO₃.

2. Electrically conductive mixed oxide according to claim 1 of the formula BaCo_{0.98}Ti_{0.02}O_{3-δ}:CO₃O₄, wherein δ defines the oxygen vacancies in the perovskite structure and is in the range of 0.1 to 0.8, preferably 0.3 to 0.7, particularly preferably 0.5 to 0.6.

3. Catalyst for the oxygen evolution reaction in an alkaline environment comprising the electrically conductive, biphasic mixed oxide according to claim 1 or 2.

4. Anode comprising the electrically conductive, biphasic mixed oxide based on perovskite according to claim 1 or 2 as well as an electrically conductive carrier material.

5. Anode according to claim 4, wherein the carrier material is a silicon wafer provided with a TiO₂ adhesion layer and a polycrystalline Pt(111) layer.

6. Use of the catalyst according to claim 3 in alkaline water electrolysis or in metal-air batteries.

7. Use of the electrically conductive, biphasic mixed oxide based on perovskite according to claim 1 or 2 in the manufacture of an anode for alkaline water electrolysis or for a metal-air battery.

8. Method for the manufacture of an anode according to claim 4 or 5, comprising
a) dissolving organic carboxylic acid, dicarboxylic acid and/or tricarboxylic acid salts and/or other oxide-forming salts of Ba and Co as well as Ti in a non-aqueous solvent,
b) heating the solution under reflux, and
c) optionally, filtering,
wherein the desired addition of Co₃O₄ in the electrically conductive mixed oxide is adjusted by the correspondingly selected excess amount of Co compared to the stoichiometric perovskite phase,
d) applying the solution to an electrically conductive substrate in a wet coating method,
e) drying and then
f) baking,
wherein steps d) to f) are optionally repeated several times, until the desired layer thickness has been achieved.

9. Method according to claim 8, wherein the salts of Ba and Co are acetates, propionates, oxalates and/or pentanedionates and the salt of Ti is Ti(IV)-oxide-bis(2,4-pentanedionate).

10. Method according to claim 8 or 9, wherein the solvent is a mixture of propionic acid and propionic acid anhydride in the ratio by volume of 10:1 to 2:1, preferably 7:1 to 4:1, particularly preferably 5:1.

11. Method according to claim 8, wherein the wet coating method is a spin coating, spray coating or dip coating method.

12. Method according to any one of claims 8 or 9, wherein the drying is carried out at 250 to 400 °C, preferably at 300 to 380 °C and particularly preferably at 350 °C.

13. Method according to one or more of claims 8 to 12, wherein the baking is carried out at 700 to 1000 °C, preferably at 800 to 900 °C, particularly preferably at 850 °C.

14. Method according to one or more of claims 8 to 13, wherein the thickness of the catalyst layer after step f) is 50 to 150, preferably 80 to 130, particularly preferably 100 nm, determined by an SEM method.

15. Amorphous mixed oxide having a Co:Ba ratio of 2:1 and a TTB (Tetragonal Tungsten Bronze)-related structure, in which Co atoms are located in pronounced CoO₆ octahedra and additionally form tetrahedral gaps, obtainable by using the electrically conductive, biphasic mixed oxide based on perovskite according to any one of claims 1 or 2 as catalyst in the oxygen evolution reaction of alkaline water electrolysis, wherein said amorphous product is formed by leaching out Ba.

## Revendications

1. Oxyde mixte biphasé électroconducteur à base de pérovskite de structure ABO₃ avec A = Ba et B = Co, comprenant en outre 5-45 % atomiques, de préférence 15 à 30 % atomiques, le plus préférentiellement 25 % atomiques Co₃O₄, dans lequel les pourcentages atomiques de Co sont basés sur le nombre total d'atomes de Co dans la pérovskite ABO₃ et de 0,5 à 3 % atomiques, de préférence 1 à 2,5 % atomique, le plus préférentiellement 2 % atomiques de Ti comme dopant, dans lequel les pourcentages atomiques de Ti sont basés sur le nombre total de cations Co dans la pérovskite ABO₃.

2. Oxyde mixte électroconducteur selon la revendication 1 de formule BaCo_{0,98}Ti_{0,02}O_{3-δ}:Co₃O₄, dans lequel δ définit les lacunes d'oxygène dans la structure pérovskite et se trouve dans la plage de 0,1 à 0,8, de préférence de 0,3 à 0,7, le plus préférentiellement de 0,5 à 0.6.

3. Catalyseur pour la réaction de dégagement d'oxygène en milieu alcalin, comprenant l'oxyde mixte biphasé électroconducteur selon la revendication 1 ou 2.

4. Anode, comprenant l'oxyde mixte biphasé électroconducteur à base de pérovskite selon la revendication 1 ou 2 ainsi qu'un matériau support électroconducteur.

5. Anode selon la revendication 4, dans laquelle le matériau support est une plaquette de silicium dotée d'une couche adhésive de TiO₂ et d'une couche de Pt(111) polycristallin.

6. Utilisation du catalyseur selon la revendication 3 dans l'électrolyse alcaline de l'eau ou dans des batteries métal-air.

7. Utilisation de l'oxyde mixte biphasé électroconducteur à base de pérovskite selon la revendication 1 ou 2 pour la fabrication d'une anode pour l'électrolyse alcaline de l'eau ou pour une batterie métal-air.

8. Procédé de fabrication d'une anode selon la revendication 4 ou 5 comprenant
a) la dissolution de sels organiques d'acide carboxylique, d'acide dicarboxylique et/ou d'acide tricarboxylique et/ou d'autres sels oxydeurs de Ba et Co ainsi que Ti dans un solvant non aqueux,
b) le réchauffement de la solution au reflux,
c) le cas échéant, la filtration,
dans lequel l'addition souhaitée de Co₃O₄ dans l'oxyde mixte électroconducteur est ajustée par la quantité excédentaire de Co sélectionnée en conséquence par rapport à la phase pérovskite stœchiométrique,
d) l'application de la solution sur un substrat électroconducteur dans un procédé de revêtement humide,
e) le séchage, puis
f) la cuisson,
dans lequel les étapes d) à f) sont répétées plusieurs fois le cas échéant, jusqu'à ce que l'épaisseur de couche souhaitée soit atteinte.

9. Procédé selon la revendication 8, dans lequel les sels de Ba et Co sont des acétates, propionates, oxalates et/ou pentanedionates et le sel de Ti est Ti(IV)-oxyde-bis(2,4-pentanedionate).

10. Procédé selon la revendication 8 ou 9, dans lequel le solvant est un mélange d'acide propionique et d'anhydride propionique dans un rapport en volume de 10/1 à 2/1, de préférence de 7/1 à 4/1, le plus préférentiellement de 5/1.

11. Procédé de la revendication 8, dans lequel le procédé de revêtement humide est un procédé de revêtement par centrifugation, par pulvérisation ou par immersion.

12. Procédé selon l'une quelconque des revendications 8 ou 9, dans lequel le séchage s'effectue entre 250 et 400 °C, de préférence entre 300 et 380 °C et le plus préférentiellement à 350 °C.

13. Procédé selon une ou plusieurs des revendications 8 à 12, dans lequel la cuisson s'effectue entre 700 et 1000 °C, de préférence entre 800 et 900 °C, le plus préférentiellement à 850 °C.

14. Procédé selon une ou plusieurs des revendications 8 à 13, dans lequel l'épaisseur de la couche de catalyseur selon l'étape f) est de 50 à 150, de préférence de 80 à 130, le plus préférentiellement de 100 nm, déterminée par une méthode SEM.

15. Oxyde mixte amorphe qui présente un rapport Co/Ba de 2/1 et une structure proche de TTB (Tetragonal Tungsten Bronze) dans laquelle les atomes de Co se trouvent dans des octaèdres CoO₆ distincts et forment en outre des espaces tétraédriques, pouvant être obtenus en utilisant l'oxyde mixte électroconducteur à base de pérovskite selon l'une quelconque des revendications 1 ou 2 en tant que catalyseur dans la réaction de dégagement d'oxygène de l'électrolyse alcaline de l'eau, dans lequel ledit oxyde mixte amorphe est créé par lixiviation de Ba.
